# EUROPEAN PATENT APPLICATION

(11) **EP 4 429 103 A1**
(43) Date of publication of application: **11.09.2024**
(21) Application number: 22897926.6
(22) Date of filing: 25.11.2022
(51) Int. Cl.: H02S 30/10

(54) **ASSEMBLY FRAME PROFILE AND ASSEMBLY FRAME THEREFOR**

(30) Priority: 26.11.2021 CN 202122964007 U
(71) Applicant: Trina Solar Co., Ltd, Changzhou, Jiangsu 213031 (CN)
(72) Inventor: XU, Jianmei, hangzhou, Jiangsu 213031 (CN); JIANG, Ahua, hangzhou, Jiangsu 213031 (CN)
(74) Representative: Arnold & Siedsma
(86) International application number: PCT/CN2022/134319
(87) International publication number: WO 2023/093844

(57) **Abstract**

The present invention provides an assembly frame profile and an assembly frame therefor. The assembly frame profile comprises a profile body and a profile member; the profile body is provided with a groove opening and a cavity; an opening is formed in the bottom wall of the cavity; part of the profile member is inserted into the cavity through the opening; the bottom wall of the cavity is divided into a first bottom wall and a second bottom wall by means of the opening; the tail end of the first bottom wall and/or the second bottom wall extends upwards to form a barb; a first barb groove is formed between the barb and a corresponding side wall of the cavity; the profile member comprises a first part connected to the profile body, a second part constituting the bottom edge of the assembly frame profile, and a third part connecting the first part and the second part; the first part is inserted into the cavity; at least one side edge of the first part extends downwards to form a rib; and a second barb groove is formed between the rib and the third part. According to the present invention, the assembly frame profile and the assembly frame can be effectively prevented from eversion in the process of long-term stress, and meanwhile, are convenient to assemble.

## Description

### TECHNICAL FIELD

The present invention relates to the field of photovoltaic technology, and in particular to an assembly frame profile and an assembly frame therefor.

### BACKGROUND

Photovoltaic assemblies generally include a laminate and an assembly frame configured to secure the laminate, including solar cells, to form the photovoltaic assembly. The assembly frame can enhance the overall mechanical strength of the photovoltaic assembly, seal an edge of the laminate, and during the subsequent mounting of the photovoltaic assembly, the photovoltaic assembly can be fixed to a photovoltaic bracket through the assembly frame. Therefore, the strength of the assembly frame determines the overall strength of the photovoltaic assembly.

With the gradual improvement of the cost reduction requirements of photovoltaic products, the conventional assembly frame can no longer satisfy the requirements. The thickness of each wall of a profile of a main body of the conventional assembly frame is substantially the same, while the stress on the assembly frame is different, which leads to the redundancy and waste of the load on a portion of the assembly frame that are subject to less stress, while a portion of the assembly frame that are subject to greater stress is prone to failure such as tearing of a mounting hole.

The above problems can be solved to a certain extent by assembling various reinforcing structures on a profile body, and the reinforcing structures can partially reinforce the profile that are subject to greater stress, and appropriately reduce the strength of the rest parts of the profile, so that the overall mechanical strength configuration of the profile is more reasonable. However, a structure between the profile body and the various reinforcing structures needs to be further optimized to improve the overall mechanical properties of the assembled profile.

### SUMMARY

In view of the above technical problems, the present invention provides an assembly frame profile to optimize the mechanical properties of a profile.

According to another aspect of the present invention, an assembly frame is provided to optimize the mechanical properties of the assembly frame.

Accordingly, the present invention adopts the following technical solution: an assembly frame profile includes a profile body having a notch and a cavity, a bottom wall of the cavity having an opening; and a profile member partially embedded into the cavity through the opening. The opening divides the bottom wall of the cavity into a first bottom wall and a second bottom wall, an end of the first bottom wall and/or an end of the second bottom wall extends upward to form a barb, a first barb groove is formed between the barb and a corresponding side wall of the cavity, the profile member has a first portion connected to the profile body, a second portion forming a bottom edge of the assembly frame profile, and a third portion connecting the first portion and the second portion, the first portion is embedded into the cavity, at least one side edge of the first portion extends downward to form a protruding rib, and a second barb groove is formed between the protruding rib and the third portion. Through the structures of the barb, the first barb groove, the protruding rib, and the second barb groove between the profile body and the profile member, the profile body and the profile member are engaged with each other, and the effect of preventing the assembly frame profile from eversion in the process of being stressed is achieved. The structures of the barb, the first barb groove, the protruding rib, and the second barb groove can simultaneously serve as a guide at the same time to facilitate the assembly of the profile member.

Further, the ends of the first bottom wall and the second bottom wall extend upward to form the barb, respectively, and two side edges of the first portion extend downward to form the protruding rib, respectively. A pair of structures of the barb, the first barb groove, the convex edge, and the second barb groove are formed between the profile body and the profile member, so that the engagement effect between the profile body and the profile member is better, and the anti-eversion effect is enhanced. The structure of the barb, the first barb groove, the protruding rib, and the second barb groove can simultaneously serve as a guide to facilitate the assembly of the profile member.

Further, a length of the profile member is less than a length of the profile body. The raw material cost of the assembly frame profile can be saved, thereby reducing the cost of the assembly frame.

Further, the first portion has an inner side edge, an outer side edge, a top edge, and a bottom edge, and the inner side edge is formed with a serrated inner side surface. The serrated inner side surface can reduce the contact area between the profile member and the profile body, so that the movement of the profile member in the profile body is convenient in the assembly process, and the assembly is convenient, and meanwhile, the contact position of the riveting point can be enlarged during the punching process to be better connected.

Further, at least one cross beam is further provided between the top edge and the bottom edge. The cross beam can enhance the transverse strength of the profile member. In the specific position design, the cross beam can be located on or adjacent to the punching riveting point to play a certain role in supporting and strengthening. In the punching process, the deformation of the assembly frame profile is effectively prevented, and the concave point is formed more effectively.

Further, two cross beams are provided between the top edge and the bottom edge. The specific number of the cross beams is determined according to the height of the assembly frame profile or the assembly frame or the actual mounting requirement. When the assembly frame profile or assembly frame has a large size in height, the number of the cross beams can be increased. In the specific position design, the cross beam can be located on or adjacent to the punching riveting point to play a certain role in supporting and strengthening. In the punching process, the deformation of the assembly frame profile is effectively prevented, and the concave point is formed more effectively.

Further, a thickness of a portion of the second portion located below the cavity is greater than a thickness of other portion of the second portion. The bending strength of the whole profile can be enhanced.

Further, the second portion extends from a lower side of the cavity to an inner side to form a mounting edge, the mounting edge is provided with a mounting hole, and a thickness of the mounting edge is greater than a wall thickness of the profile body. Thickening the mounting edge can effectively prevent the failure of the frame caused by tear of mounting hole.

Further, a ratio of a thickness H1 of the third portion to a width H2 of the profile member is in a range of 0.25: 1 to 0.40: 1. The third portion is the stressed portion of the assembly frame profile or the entire assembly frame. The present invention performs a thickening process on this portion to improve the mechanical strength of the assembly frame profile or the overall assembly frame.

According to another aspect of the present invention, an assembly frame is provided, at least a portion of a photovoltaic assembly frame adopts the assembly frame profile as any one of the foregoing, such as forming an edge of the assembly frame, such as a long edge or a short edge, or forming each edge of the assembly frame.

In conclusion, compared with the prior art, the assembly frame profile and the assembly frame formed by the same of the present invention have the following advantages:
1. The combination of the profile body and the profile member is tighter, which can effectively prevent the profile and assembly frame from eversion during long-term stress;
2. The structures of the barb, the first barb groove, the protruding rib, and the second barb groove simultaneously serve as a guide to facilitate the assembly of the profile member;
3. The serrated contact surface between the profile member and the profile body is formed on the profile member, which can reduce the friction between the profile member and the profile body during assembly and facilitate assembly;
4. Thickening and strengthening a plurality of portions of the profile member, where these portions are the portions of the assembly frame profile or the assembly frame that are subjected to greater stress during use, so that the assembly frame profile or the assembly frame as a whole has better mechanical properties;

Other advantages, objects and features of the present invention will be partly embodied by the following description, and partly will be understood by those skilled in the art by the research and practice of the present invention.

### BRIEF DESCRIPTION OF THE DRAWINGS

FIG. 1 is a schematic view of a profile body according to a first embodiment of the present invention.
FIG. 2 is a schematic view of a profile member according to the first embodiment of the present invention.
FIG. 3 is a schematic view of the profile body and the profile member after being assembled according to the first embodiment of the present invention.
FIG. 4 is a schematic view of the profile body according to a second embodiment of the present invention.
FIG. 5 is a schematic view of the profile body and the profile member after being assembled according to the second embodiment of the present invention.

### Description of reference signs:

1-profile body; 11-notch; 12-cavity; 13-upper wall; 14-lower wall; 15-bottom wall; 151-first bottom wall; 152-second bottom wall; 153-barb; 16-inner side wall; 17-outer side wall; 18-opening; 19-first barb groove; 2-profile member; 21-first portion; 211-inner side edge; 211a-inner side surface; 212-outer side edge; 213-top edge; 214-bottom edge; 215-protruding rib; 216-cross beam; 22-second portion; 22a-mounting edge; 23-third portion; 24-second barb groove; 3-assembly frame profile.

### DETAILED DESCRIPTION OF THE EMBODIMENTS

In order to enable those in the technical field to better understand the solution of the present invention, the technical solution in the embodiments of the present invention will be clearly and completely described below in conjunction with the drawings in the embodiments of the present invention.

In the embodiment of the present invention, a profile member 2 may be mounted on a profile body 1 to form an assembly frame profile 3.

### Embodiment 1:

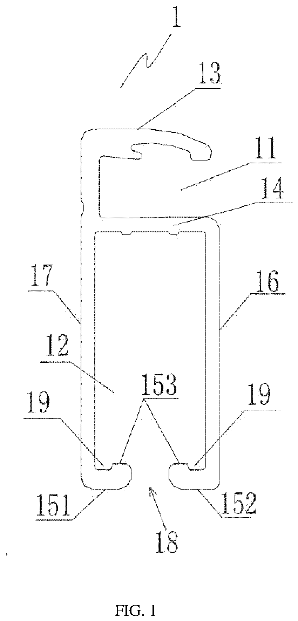

As shown in FIGS. 1 to 3, the present embodiment provides an assembly frame profile 3, including a profile body 1 and a profile member 2. The profile body 1 has a notch 11 and a cavity 12. The notch 11 is configured to mount a workpiece to be mounted. Specifically, an edge of the workpiece to be mounted may be embedded into the notch 11.

A common profile body structure is taken as an example for description. A side where the notch 11 of the assembly frame profile 3 is located is defined as an "inner side". The profile body 1 may have an upper wall 13, a lower wall 14, a bottom wall 15, an inner side wall 16, and an outer side wall 17. The notch 11 may be formed among an upper portion of the outer side wall 17, the upper wall 13, and the lower wall 14. The cavity 12 may be formed among a lower portion of the outer side wall 17, the lower wall 14, the bottom wall 15, and the inner sidewall 16. The bottom wall 15 has an opening 18, through which the profile member 2 is partially embedded into the cavity 12. That is, a part of the profile member 2 can be embedded into the cavity 12 through the opening 18. The opening 18 divides the bottom wall 15 into a first bottom wall 151 and a second bottom wall 152. Ends of the first bottom wall 151 and the second bottom wall 152 extend upward to form two barbs 153, respectively. Two first barb grooves 19 may be formed between one barb 153 and the inner side wall 16, and between another barb 153 and the outer side wall 17, respectively. That is, an end of the first bottom wall 151 adjacent to the opening 18 and an end of the second bottom wall 152 adjacent to the opening 18 can both extend toward the cavity 12 to form barbs 153, and gaps are formed between the barb 153 and the inner side wall 16 and between the barb 153 and the outer side wall 17, so that the barbs 153, the first bottom wall 151, and the inner side wall 16 can form one first barb groove 19, and the barb 153, the first bottom wall 151, and the outer side wall 17 can form another first barb groove 19.

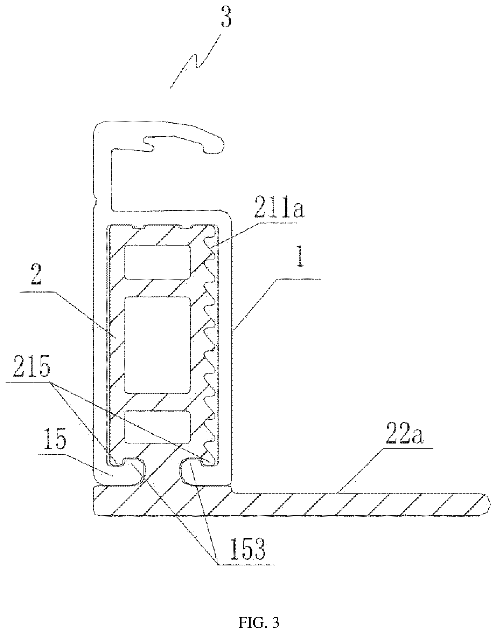

The profile member 2 has a first portion 21 connected to the profile body 1, a second portion 22 forming a bottom wall of the assembly frame profile 3, and a third portion 23 connecting the first portion 21 and the second portion 22. The first portion 21 is embedded in the cavity 12. That is, the profile member 2 has the first portion 21, the second portion 22, and the third portion 23. The first portion 21 is embedded in the cavity 12 and connected to the profile body 1. The first portion 21 is connected to the second portion 22 through the third portion 23. The second portion 22 forms the bottom wall of the profile member 2. An outer contour of the first portion 21 is adapted to a shape of the cavity 12 of the aforementioned profile body 1. A cross-section of the first portion 21 may be rectangular as a whole, and has an inner side edge 211, an outer side edge 212, a top edge 213, and a bottom edge 214. The inner side edge 211 and the outer side edge 212 extend downward to form a protruding rib 215, respectively. A second barb groove 24 is formed between the protruding rib 215 and the third portion 23. That is, the inner side edge 211 and the outer side edge 212 each extends away from the top edge 213 with respect to the bottom edge 214 to form the protruding rib 215, and a gap is formed between the protruding rib 215 and the third portion 23, so that the protruding rib 215, the third portion 23, and the bottom edge 214 can form the second barb groove 24. As shown in FIG. 3, when the profile body 1 and the profile member 2 are assembled, the barb 153 may be located in the second barb groove 24, and the protruding rib 215 may be located in the first barb groove 19, so as to form a mutually engaged structure. When the assembly frame formed by the assembly frame profile 3 provided by the embodiment of the present invention is subjected to external force during use, the assembly frame can be deformed and twisted. At the engaged structure, since the barbs 153 and the protruding ribs 215 are tightly engaged with the corresponding barb grooves, that is, the barbs 153 are tightly engaged with the second barb grooves 24, and the protruding ribs 215 are tightly engaged with the first barb grooves 19, the assembly frame can be effectively prevented from eversion, and the assembly frame can be prevented from being twisted unilaterally.

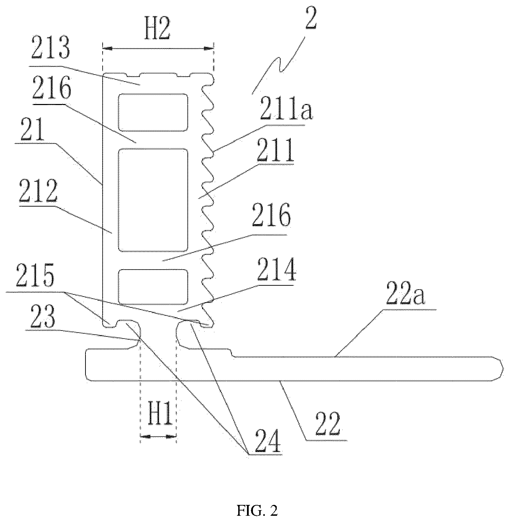

In order to obtain a better implementation effect, as shown in FIG. 2, the inner side edge 211 may be formed with a serrated inner side surface 211a. That is, a surface of the inner side edge 211 away from the outer side edge 212 may be serrated. According to such design, when the profile body 1 and the profile member 2 are assembled, the inner side surface 211a is in contact with the inner side wall 16 of the profile body 1. Since the serrated inner side surface 211a can reduce a contact area, during the assembly process of the profile body 1 and the profile member 2, the friction force of the profile member 2 moving in the cavity 12 can be reduced, thereby facilitating the assembly of the profile body 1 and the profile member 2.

In order to obtain a better implementation effect, at least one cross beam 216 may be provided between the top edge 213 and the bottom edge 214 of the first portion 21. In this embodiment, two cross beams 216 are provided. Certainly, a number of the cross beams 216 may be adjusted according to a height of the assembly frame profile 3 or the assembly frame or the actual mounting requirements. When the assembly frame profile 3 or the assembly frame has a larger size in height, the number of the cross beams 216 may be increased. In a specific position design, the cross beams 216 may be located on or adjacent to a punching riveting point, so that a concave point can be effectively formed, instead of the failure of the connection process in which the concave point is formed on the assembly frame and a reinforcing rib is deformed. At the same time, due to the support function of the cross beam 216, the deformation of the assembly frame can be effectively prevented.

In order to obtain a better implementation effect, the second portion 22 may have different thicknesses. Specifically, a thickness of a portion of the second portion 22 located below the cavity 12 may be greater than a thickness of other portion of the second portion 22. The portion of the second portion 22 below the cavity 12 is a portion of the assembly frame profile 3 or the assembly frame where is subjected to greater stress. Thickening and reinforcing the portion can enhance the strength and bending resistance of the assembly frame profile 3 or the assembly frame as a whole.

The second portion 22 extends from a lower side of the cavity 12 to the inner side to form a mounting edge 22a, that is, a portion of the second portion 22 located below the cavity 12 may extend away from the outer side edge 212. The mounting edge 22a may be provided with a mounting hole (not shown). In order to obtain a better implementation effect, a thickness of the mounting edge 22a may be increased, so that the thickness thereof is greater than a wall thickness of each wall of the profile body 1. In this way, only the mounting edge 22a is thickened and reinforced, which can effectively prevent the mounting hole from being torn and causing the assembly frame to fail, without the need to thicken the profile body 1, thereby saving raw materials.

In order to obtain a better implementation effect, in this embodiment, the third portion 23 may also be thickened and reinforced. Specifically, a thickness of the third portion 23 may be increased to H1, so that a ratio of the thickness H1 of the third portion 23 to a width H2 of the profile member 2 is in a range of 0.25: 1 to 0.40: 1, and a large chamfer design is adopted for a side wall of the third portion 23. The third portion 23 is the stressed portion of the assembly frame profile 3 or the entire assembly frame. In this embodiment, this portion is thickened and reinforced to improve the mechanical strength of the assembly frame profile 3 or the overall assembly frame.

In the present invention, a length of the profile member 2 may be less than a length of the profile body 1. In this way, the raw material cost of the assembly frame profile 3 can be saved, thereby reducing the cost of the assembly frame. In the actual use process, a number of the profile member 2 on the profile body 1 can be adjusted according to the specific length and stress condition of the assembly frame profile 3.

### Embodiment 2:

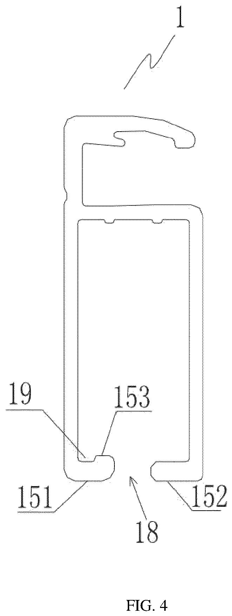

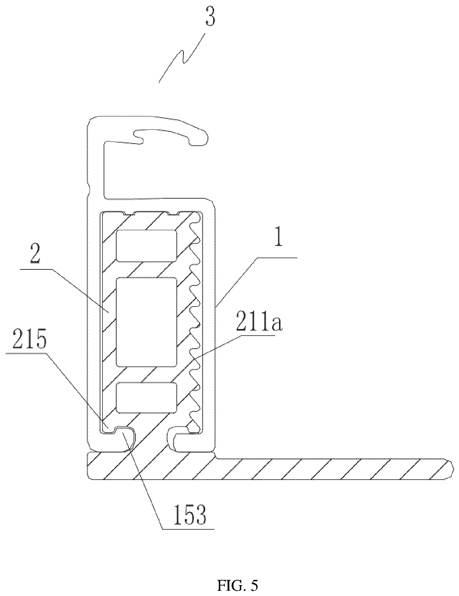

As shown in FIG. 4 and FIG. 5, the difference between this embodiment and embodiment 1 lies in that, only the end of the first bottom wall 151 of the profile body 1 extends upward to form the barb 153, and the first barb groove 19 is formed between the barb 153 and the outer side wall 17, while the end of the second bottom wall 152 does not extend upward. Correspondingly, in the first portion 21 of the profile member, only the outer side edge 212 extends downward to form the protruding rib 215, and the second barb groove 24 is formed between the protruding rib 215 and a portion of the third portion 23 adjacent to the outer side, while the outer side edge 212 does not extend downward. During actual use, since the main external force applied to the assembly frame profile 3 or the assembly frame comes from an end of the laminate (i.e., the "inner side" defined in the present invention), the risk of eversion is mainly located on the outer side (the side opposite to the "inner side") of the assembly frame profile 3 or the assembly frame. In this embodiment, since the engaging structure of the barb 153, the protruding rib 215 and the corresponding barb groove are formed only on the outer side, most of the risks of eversion can be prevented.

### Embodiment 3:

This embodiment provides assembly frame. the assembly frame profile 3 provided in embodiment 1 or 2 forms at least a part of the photovoltaic assembly frame, such as forming an edge of the assembly frame, such as a long edge or a short edge, or forming each edge of the assembly frame.

In the description of the present invention, the terms "assembly", "photovoltaic assembly", "solar assembly", and "solar photovoltaic assembly" have the same meaning. The terms "assembly frame" and "photovoltaic assembly frame" also have the same meaning. It is defined that the notch side of the profile is the "inner side", and the side opposite to the "inner side" is the "outer side".

In the description of the present invention, it should be noted that the orientation, direction or positional relationship indicated by the terms "vertical", "horizontal", "upper", "lower", "left", "right", "inner", "outer", "side", "width", "height", etc. are based on the orientation or positional relationship shown in the drawings, which are only for the convenience of description and simplified description of the present invention, and is not intended to indicate or imply that the devices or elements referred to must have a particular orientation, be constructed or operate in a particular orientation, and therefore, should not be construed as limiting the invention. Moreover, the terms "first", "second", etc., are used for descriptive purposes only and are not to be construed as indicating or implying relative importance.

In the description of the present invention, it should be noted that, unless otherwise specified and limited, the terms "mounted", "connected", "connection", and "provided on" should be understood in a broad sense, for example, it can be a fixed connection or detachable connection, it can be a direct connection or an indirect connection through an intermediate medium, and it can be the internal communication of two components. For those skill in the art, the specific meanings of the above terms in the present invention can be understood according to specific cases.

The specific embodiments described herein are merely illustrative of the spirit of the invention. Those skilled in the art to which the present invention pertains may make various modifications or supplements or adopt similar ways to replace the described specific embodiments, but without departing from the spirit of the present invention or exceeding the scope defined in the appended claims.

## Claims

1. An assembly frame profile (3), comprising:
a profile body (1) having a notch (11) and a cavity (12), a bottom wall (15) of the cavity (12) having an opening (18); and
a profile member (2) partially embedded into the cavity (12) through the opening (18);
wherein the opening (18) divides the bottom wall (15) of the cavity (12) into a first bottom wall (151) and a second bottom wall (152), an end of the first bottom wall (151) and/or an end of the second bottom wall (152) extends upward to form a barb (153), a first barb groove (19) is formed between the barb (153) and a corresponding side wall of the cavity (12), the profile member (2) has a first portion (21) connected to the profile body (1), a second portion (22) forming a bottom edge of the assembly frame profile (3), and a third portion (23) connecting the first portion (21) and the second portion (22), the first portion (21) is embedded into the cavity (12), at least one side edge of the first portion (21) extends downward to form a protruding rib (215), and a second barb groove (24) is formed between the protruding rib (215) and the third portion (23).

2. The assembly frame profile (3) according to claim 1, wherein the ends of the first bottom wall (151) and the second bottom wall (152) extend upward to form the barb (153), respectively, and two side edges of the first portion (21) extend downward to form the protruding rib (215), respectively.

3. The assembly frame profile according to claim 1, wherein a length of the profile member (2) is less than a length of the profile body (1).

4. The assembly frame profile (3) according to claim 1, wherein the first portion (21) has an inner side edge (211), an outer side edge (212), a top edge (213), and a bottom edge (214), and the inner side edge (211) is formed with a serrated inner side surface (211a).

5. The assembly frame profile (3) according to claim 4, wherein at least one cross beam (216) is further provided between the top edge (213) and the bottom edge (214).

6. The assembly frame profile (3) according to claim 5, wherein two cross beams (216) are provided between the top edge (213) and the bottom edge (214).

7. The assembly frame profile (3) according to claim 1, wherein a thickness of a portion of the second portion (22) located below the cavity (12) is greater than a thickness of other portion of the second portion (22).

8. The assembly frame profile (3) according to claim 7, wherein the second portion (22) extends from a lower side of the cavity (12) to an inner side to form a mounting edge (22a), the mounting edge (22a) is provided with a mounting hole, and a thickness of the mounting edge (22a) is greater than a wall thickness of the profile body (1).

9. The assembly frame profile (3) according to claim 1, wherein a ratio of a thickness H1 of the third portion (23) to a width H2 of the profile member (2) is in a range of 0.25: 1 to 0.40: 1.

10. An assembly frame, wherein at least a part of a photovoltaic assembly frame adopts the assembly frame profile (3) according to any one of claims 1 to 9.
